# EUROPÄISCHE PATENTSCHRIFT

(11) **EP 1 450 149 B1**
(45) Veröffentlichungstag und Bekanntmachung des Hinweises auf die Patenterteilung: **03.01.2007**
(21) Anmeldenummer: 03003925.9
(22) Anmeldetag: 21.02.2003
(51) Int. Cl.: G01M 11/00

(54) **Vorrichtung und Verfahren zur Bestimmung der chromatischen Dispersion von optischen Komponenten**
Method and apparatus for determining the chromatic dispersion of optical components
Procédé et dispositif de mesure de la dispersion chromatique de composants optiques

(43) Veröffentlichungstag der Anmeldung: 25.08.2004
(73) Patentinhaber: Thorlabs, Inc., Newton New Jersey 07860 (US)
(72) Erfinder: Krause, Egbert, 09217 Burgstädt (DE)
(74) Vertreter: Rumpler, Wolfgang

(56) Entgegenhaltungen:
- EP-A- 1 207 377
- EP-A- 1 369 662

## Beschreibung

### Für folgende(n) Vertragsstaat(en): AT, BE, BG, CH, CY, CZ, DK, EE, ES, FI, FR, GR, HU, IE, IT, LI, LU, MC, NL, PT, SE, SI, SK, TR

Die vorliegende Erfindung betrifft eine Vorrichtung zur Bestimmung der chromatischen Dispersion einer Probe beziehungsweise optischen Komponente, mit einer Strahlungsquelle für die Abstrahlung einer Strahlung mit unterschiedlichen Wellenlängen, einer Interferometereinrichtung, die von der Strahlungsquelle bestrahlbar ist, zum Erzeugen einer probenspezifischen Interferenzstrahlung, einer Messeinrichtung, mit der Leistungsänderungen und Polarisationsänderungen der Interferenzstrahlung messbar sind, und einer Auswerteeinrichtung, mit der die chromatische Dispersion der Probe anhand der Leistungsänderungen und/oder. Polaristionsänderung ermittelbar sind. Darüber hinaus betrifft die vorliegende Erfindung ein entsprechendes Verfahren zur Bestimmung der chromatischen Dispersion einer Probe.

Bei Test- und Messgeräten für die Charakterisierung optischer Komponenten sind in der Messtechnikentwicklung zwei Trends zur Reduzierung der Messzeit zu beobachten:
1. Trend zu Swept-Wavelength-Systemen
   Bei diesen Systemen werden die Messparameter nicht punktweise bei schrittweise veränderter Wellenlänge gemessen, sondern ein abstimmbarer Laser wird kontinuierlich über den zu analysierenden Wellenlängenbereich abgestimmt, während die Messdaten aufgenommen werden.
2. Trend zu All-Parameter-Analysatoren
   Ein derartiges Messsystem ist in der Lage, möglichst alle relevanten Parameter in kurzer Zeit und gegebenenfalls gleichzeitig mit nur einem Laser-Scan über den gesamten spektralen Messbereich zu erfassen. Bei optischen Komponenten zählen u.a. zu den relevanten Messparametern:
   - IL Einfügungsverlust (Insertion loss)
   - RL Reflexionsverlust (Return loss)
   - PDL polarisationsabhängige Dämpfung (Polarization dependent loss)
   - PMD Polarisations-Moden-Dispersion bestehend aus der Gruppenlaufzeit DGD (Differential group delay) und den Hauptzuständen PSP (Principal states of polarization) der Polarisation, und
   - CD die chromatische Dispersion beziehungsweise Gruppenlaufzeit GD.

Die im folgenden beschriebenen Messverfahren, beziehungsweise Messvorrichtungen, spiegeln diese Trends wider.

Hinsichtlich der CD-Messung (chromatische Dispersion) sind prinzipiell zwei unterschiedliche Messverfahren bekannt. Die eine basiert auf der elektrischen Messung und die andere auf der optischen Messung der Phasenlaufzeit.

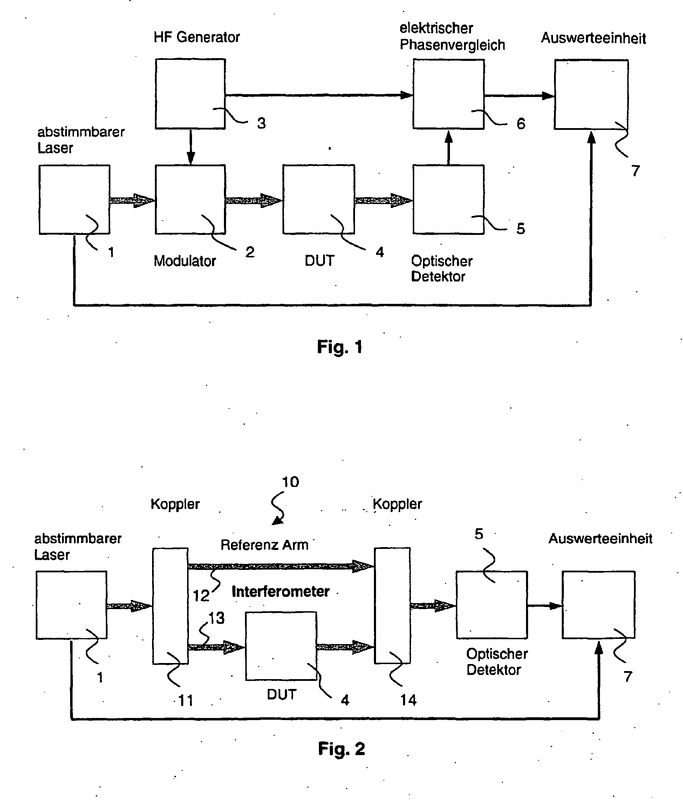

Eine Vorrichtung zur elektrischen Bestimmung der Phasenlaufzeit ist in Figur 1 wiedergegeben. Die Strahlung eines abstimmbaren Lasers 1 wird in einem Modulator, beispielsweise in einem Frequenzbereich von 0.1 bis 5 GHz, sinusförmig moduliert. Hierzu wird der Modulator 2 durch einen Hochfrequenzgenerator 3 angesteuert. Das modulierte Licht wird durch eine Probe 4 (DUT, device under test) gesandt. Ein optischer Detektor 5 detektiert das durch die Probe 4 beeinflusste modulierte Licht und gibt ein entsprechendes elektrisches Signal an einen Vergleicher 6 weiter. Dieser vergleicht die Phase des elektrischen Signals des optischen Detektors 5 mit dem vom Hochfrequenzgenerator 3 erhaltenen Phasensignal. Aus diesem elektrischen Phasenvergleich und der Wellenlängeninformation des abstimmbaren Lasers 1 ermittelt eine Auswerteeinheit 7 die chromatische Dispersion.

Das Licht erfährt auf dem Weg durch die Probe, beziehungsweise durch das Messobjekt DUT 4, eine Verzögerung, die sich in einer Gruppenlaufzeit äußert. Diese Gruppenlaufzeit berechnet sich aus der Ableitung der Phasengeschwindigkeit und ist wellenlängenabhängig. Die Ableitung der wellenlängenabhängigen Gruppenlaufzeit ergibt die wellenlängenabhängige chromatische Dispersion des Messobjekts 4 mit der Dimension ps/nm.

Eine Vorrichtung zur optischen Bestimmung der Phasenlaufzeit ist in Figur 2 ebenfalls in einem Blockdiagramm wiedergegeben. Das Messobjekt 4 wird hier in einem Interferometer 10 analysiert. Dort wird das von dem abstimmbaren Laser 1 stammende Licht in einem ersten Koppler 11 aufgespaltet. Hierdurch entstehen zwei optische Pfade, der Referenzarm 12 und der Messarm 13, in dem das Messobjekt 4 liegt. Ein zweiter Koppler 14 bringt die beiden Strahlen aus dem Referenzarm 12 und dem Messarm 13 zur Interferenz. Durch diese Zusammenführung werden die beiden Signalfeldstärken addiert. In dem anschließenden optischen Detektor 5 erfolgt die Umwandlung in ein elektrisches Überlagerungssignal, das von der Phasenlage, der Dämpfung und der Polarisationstransformation in beiden Interferometerarmen sowie von der Wellenlänge abhängt. Das Überlagerungssignal wird wiederum zusammen mit der Wellenlängeninformation von dem abstimmbaren Laser 1 der Auswerteeinheit 7 zur Ermittlung der chromatischen Dispersion zugeleitet. Wird die Wellenlänge durchgestimmt, so ergibt sich ein periodisches Detektorsignal, dessen Periode mit dem Gruppenlaufzeitunterschied in beiden Interferometerarmen zusammenhängt.

Nachteilig an diesem Verfahren ist, dass in dem optischen Detektor 5 nur eine Summenleistung aus beiden Interferometerarmen gemessen wird. Dabei spielt jedoch die relative Lage der Polarisationen in beiden Armen eine entscheidende Rolle. Bei gleicher Polarisation treten die größten Leistungsschwankungen bei veränderlicher Wellenlänge auf. Die Phasenbestimmung ist dann leicht möglich. Im Gegensatz dazu treten bei orthogonaler Polarisation keinerlei Leistungsschwankungen bei veränderlicher Wellenlänge auf, sondern lediglich Polarisationsschwankungen. In diesem Fall ist eine Phasenbestimmung nicht möglich.

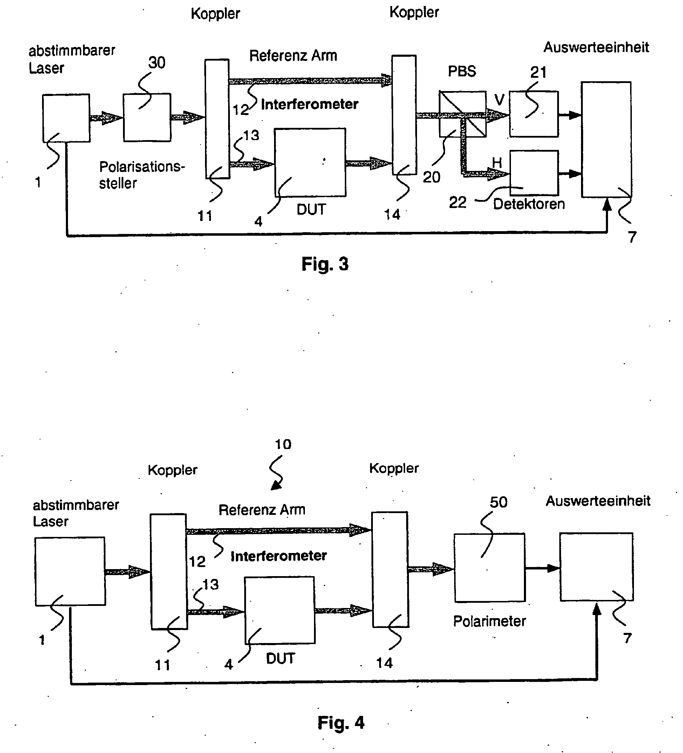

Eine verbesserte Version dieser Messvorrichtung zur Bestimmung der Phasenlaufzeitdifferenz, beziehungsweise chromatischen Dispersion, sieht daher vor, dass der optische Detektor 5 polarisationsabhängig ausgeführt wird. Eine Möglichkeit hierzu besteht in der Verwendung eines Polarisationsstrahlteilers (PBS) 20 einschließlich zweier optischer Detektoren 21 und 22, wie dies in Figur 3 dargestellt ist. Durch den Polarisationsstrahlteiler 20 wird der überlagerte Lichtstrahl in zwei orthogonal polarisierte Strahlteile zerlegt. Die mit den optischen Detektoren 21 und 22 detektierten Leistungen dieser beiden Teilstrahlen werden jeweils an die Auswerteeinheit 7 weitergeleitet.

Mit diesem Messaufbau kann eine sich verändernde Polarisation erkannt werden. Voraussetzung ist jedoch, dass sich die beiden Polarisationen in den Interferometerarmen 12,13 nicht zufällig auf die Eigenpolarisation des PBS 20 abbilden. In diesem Fall würde nämlich jeder Detektor 21, 22 die Leistung in beiden Interferometerarmen 12, 13 messen und eine Überlagerung beider Leistungen mit periodischem Überlagerungsergebnis würde nicht entstehen. Aus diesem Grund muss konventionell in dieser Messanordnung eine Polarisationsanpassung beispielsweise durch einen Polarisationssteller 30 vorgesehen sein, die gewährleistet, dass die Leistung aus dem Referenzarm 12 sich ungefähr gleichmäßig auf die beiden Detektoren 21, 22 aufteilt. Nur dann ist bei jeder beliebigen Polarisation im Messzweig 13 ein Phasenvergleich zwischen beiden Zweigen möglich. Ein derartiges Gerät zur Messung optischer Eigenschaften eines Messobjekts ist aus dem Dokument EP1207 377A2 bekannt.

Das Einstellen der Polarisationen in den beiden Interferometerzweigen ist jedoch verhältnismäßig aufwendig. Es kann nicht davon ausgegangen werden, dass eine bei einer Start-Wellenlänge optimal eingestellte Polarisation am Ende des Referenzarmes 12 bei anderen Wellenlängen innerhalb des zu untersuchenden Wellenlängenbereiches erhalten bleibt. Im allgemeinen wird sich die Polarisation durch geringfügig vorhandene PMD im Referenzarm 12 von ihrem idealen Zustand weg bewegen.
Daher besteht die Aufgabe der vorliegenden Erfindung darin, ein Verfahren und eine Vorrichtung vorzuschlagen, um die chromatische Dispersion einfacher bestimmen zu können und Nachteile durch die Wellenlängenabhängigkeit der Polarisationseinstellung zu vermeiden. Des weiteren gilt es, Nachteile zu eliminieren, die aufgrund der begrenzten optische Güte (Extinction Ratio ER) des Polarisationsstrahlteilers 20 entstehen können.

Erfindungsgemäß wird diese Aufgabe gelöst durch eine Vorrichtung zur Bestimmung der chromatischen Dispersion einer Probe mit einer Strahlungsquelle zum Abstrahlen einer Strahlung mit unterschiedlichen Wellenlängen, einer Interferometereinrichtung, die von der Strahlungsquelle bestrahlt wird, um eine probenspezifische Interferenzstrahlung zu erzeugen, einer Messeinrichtung, mit der Leistungsänderungen und Polarisationsänderungen der Interferenzstrahlung messbar sind, und einer Auswerteeinrichtung, mit der die chromatische Dispersion der Probe anhand der Leistungsänderungen und Polarisationsänderungen ermittelbar sind, wobei die Messeinrichtung ein Polarimeter umfasst.

Darüber hinaus ist erfindungsgemäß ein Verfahren zur Bestimmung der chromatischen Dispersion einer Probe vorgesehen, durch Erzeugen eines elektromagnetischen Strahls einer Strahlung mit unterschiedlichen Wellenlängen, Aufteilen des Strahls in einen Referenzstrahl und einen Messstrahl, mit dem die Probe durchstrahlt wird, Überlagern des Referenzstahls und des Messstrahls unter Erhalt eines Interferenzstrahls, Messen von Leistungsänderungen und Polarisationsänderungen des Interferenzstrahls in Abhängigkeit von der Wellenlänge der Strahlung, und Ermitteln der chromatische Dispersion der Probe anhand der Leistungsänderungen und/oder Polarisationsänderungen, wobei das Messen mit einem Polarimeter erfolgt.

Das Polarimeter gewährleistet, dass die durch die Interferenz im Interferometer hervorgerufenen wellenlängenabhängigen Schwankungen unabhängig von der Polarisation in den beiden Interferometerzweigen bestimmt werden können. Die Schwankungen umfassen Leistungs- und/oder Polarisationsschwankungen, abhängig von der relativen Lage der beiden Polarisationen aus den Interferometerarmen. Bei identischen Polarisationen treten nur Leistungsschwankungen auf, bei orthogonalen Polarisationen sind nur Polarisationsschwankungen messbar. Im allgemeinen Fall zufälliger Polarisationszustände werden sowohl Leistungs- als auch Polarisationsschwankungen gleichzeitig auftreten, die beide exakt vom Polarimeter erfasst werden. Es muss kein Polarisationssteller vor dem Interferometer vorgesehen werden, der eine bestimmte Polarisation in der Detektoreinheit sicherstellt.

Vorzugsweise kann es sich bei dem Polarimeter um ein vollständiges Polarimeter, das Messwerte zu allen vier Stokes-Parametern liefert, handeln. Mit diesen vier Stokes-Parametern sind zahlreiche optische Eigenschaften des Messobjekts berechenbar.

Die durch das Polarimeter gewonnenen Messdaten lassen sich auf einfache Weise in die Meßdaten umrechnen, die ein virtueller Polarisationstrahlteiler mit idealer Leistungsaufteilung liefern würde. Die beiden orthogonalen Polarisationen des virtuellen Polarisationsstrahlteilers lassen sich für jede Wellenlänge so definieren, dass sie die Leistung aus dem Referenzarm in zwei gleich große Teilleistungen zerlegen und damit maximale (virtuelle) Leistungsschwarikungen detektierbar sind. Dadurch kann der Einfluss der Polarisationsmodendispersion im Referenzarm reduziert werden. Vorzugsweise besteht die Lichtquelle aus einem abstimmbaren Laser. Dieser hat den Vorteil, dass er definiert polarisiertes Licht abstrahlt.

Die Auswertung der Messergebnisse basiert auf den vom Polarimeter gewonnenen wellenlängenabhängigen Stokes-Parametern (S₀, S₁, S₂, S₃)(λ), die jeweils beim Referenz-Scan und beim eigentlichen Mess-Scan ermittelt wurden. Diese Messdaten können beispielsweise auf die Daten zurückgeführt werden, die ein idealisierter Polarisationsstrahlteiler ermitteln würde, so dass auch die gleichen mathematischen Berechnungsmethoden gemäß dem Stand der Technik angewendet werden könnten. Die vorliegende Erfindung wird anhand der beigefügten Zeichnungen näher erläutert, die zeigen:
- Figur 1: ein Blockschaltbild eines Messaufbaus zur elektrischen Bestimmung der Gruppenlaufzeit gemäß dem Stand der Technik;
- Figur 2: ein Blockschaltbild eines Messaufbaus zur optischen Bestimmung der Gruppenlaufzeit gemäß dem Stand der Technik;
- Figur 3: ein Blockschaltbild eines alternativen Messaufbaus zur optischen Bestimmung der Gruppenlaufzeit gemäß dem Stand der Technik; und
- Figur 4: ein Blockschaltbild eines Messaufbaus zur optischen Bestimmung der Gruppenlaufzeit gemäß der vorliegenden Erfindung.

Die nachfolgend aufgeführten Ausführungsbeispiele sind bevorzugte Ausführungsformen der vorliegenden Erfindung.

Die Struktur des in Figur 4 dargestellten Messaufbaus entspricht im wesentlichen der von Figur 2. Die Elemente mit den gleichen Bezugszeichen haben die jeweils gleiche Funktion. Hinsichtlich dieser Komponenten wird daher auf die Beschreibung von Figur 2 verwiesen. Der optische Detektor aus Figur 2 ist jedoch erfindungsgemäß durch ein Polarimeter 50 ersetzt. Bezogen auf die Ausführungsform von Figur 3 ersetzt das Polarimeter 50 den Polarisationsstrahlteiler 20 einschließlich der beiden Detektoren 21 und 22. Das Polarimeter kann vollständig die Funktionalität des Polarisationsstrahlteilers ersetzen, weil die gemessenen Parameter (vier Stokes-Parameter S₀, S₁, S₂ und S₃) Informationen über Leistung und Polarisation liefern, die leicht in zwei Leistungen bei orthogonalen Polarisationen zerlegt werden können. Das Polarimeter hat damit die gleichen Eingangs- aber mehr Ausgangsgrößen wie der Polarisationsstrahlteiler 20 mit den beiden Detektoren 21 und 22. Das Polarimeter 50 kann einen virtuellen Polarisationsstrahlteiler PBS darstellen, der folgende Vorteile besitzt:
- Die zwei orthogonalen Polarisationsrichtungen, in die das detektierte Licht mathematisch zerlegt werden kann, können frei gewählt werden. Beispielsweise können die Richtungen H/V (horizontal/vertikal), + 45°/ -45° oder R/L (rechts/links) oder beliebige andere Richtungspaare gewählt werden. Die Aufteilung des Lichts in den beiden Polarisationsrichtungen kann damit so gewählt werden, dass die Leistung aus dem Referenzarm 12 immer ideal mit 50:50 in beiden virtuellen Teilleistungen zerlegt werden kann. Hierdurch können unter Beibehaltung der Aufteilung von 50:50 die beiden Polarisationsrichtungen flexibel gestaltet werden, selbst wenn sich die Polarisation im Referenz-Arm des Interferometers während des Wellenlängenscans ändert. Derartige wellenlängenabhängige Änderungen lassen sich üblicherweise nicht vermeiden und resultieren aus einem geringfügigen Einfluss der PMD im Referenzarm 12. Die störende Wirkung der PMD im Referenzarm kann aber mit Hilfe des Polarimeters eliminiert werden.
   Das Polarimeter hat weiterhin den Vorteil, dass weder die Polarisation im Referenzarm noch die Eingangspolarisation des Interferometers so eingestellt werden muss, dass die Leistungsaufteilung am Polarisationsstrahlteiler für beide Arme brauchbar wird. Der Polarisationssteller und der Vorgang des Optimierens der Polarisation kann also mit dem erfindungsgemäßen Einsatz des Polarimeters entfallen. Ein Polarimeter nach dem DUT kann beispielsweise bei einem All-Parameter-Analysator .bereits vorhanden sein, so dass die CD-Messung kostengünstig realisiert werden kann.
   Ein weiterer Vorteil der Verwendung eines Polarimeters besteht darin, dass die CD-Messung genauer durchgeführt werden kann. Dies ist erreichbar, wenn das Polarimeter sehr genau kalibriert wird (vergleiche parallele Patentanmeldung der Anmelderin mit dem Titel "Verfahren zur hochgenauen Kalibrierung von Polarimetern"), so dass man nicht durch die verhältnismäßig niedrigen Extinktionswerte von 20 bis 30 dB eines Polarisationsstrahlteilers begrenzt wird.
   Der Messverlauf gestaltet sich dann so, dass zunächst in einem Referenz-Scan die Wellenlänge des abstimmbaren Lasers über den zu analysierenden Bereich gefahren wird, wobei der Messpfad unterbrochen ist. Das Polarimeter misst dabei sowohl die wellenlängenabhängige Leistung als auch die wellenlängenabhängigen Polarisationszustände. Diese Informationen sind in den wellenlängenabhängigen Stokes-Parametern (S₀, S₁, S₂, S₃ )(λ) enthalten. Anschließend wird der Messarm aktiviert und ein entsprechendes Überlagerungsergebnis ebenfalls in Form der wellenlängenabhängigen Stokes-Parametern (S₀, S₁, S₂, S₃ )(λ) ermittelt. Diese Daten ermöglichen eine mathematische Berechnung der wellenlängenabhängigen Gruppengeschwindigkeit, deren Ableitung unmittelbar die chromatische Dispersion ergibt.
   Es ist zu beachten, dass zu dem Messergebnis nicht nur die CD sondern auch die im Messobjekt enthaltene PMD beiträgt. Da die PMD in Form der wellenlängenabhängigen DGD (Differential Group Delay) und PSP (Principal States of Polarization) durch bereits durchgeführte Standard-Messverfahren detailliert bekannt ist, kann der Anteil der PMD aus den Messergebnissen eliminiert.

### Für folgende(n) Vertragsstaat(en): DE, GB

Die vorliegende Erfindung betrifft eine Vorrichtung zur Bestimmung der chromatischen Dispersion einer Probe beziehungsweise optischen Komponente, mit einer Strahlungsquelle für die Abstrahlung einer Strahlung mit unterschiedlichen Wellenlängen, einer Interferometereinrichtung, die von der Strahlungsquelle bestrahlbar ist, zum Erzeugen einer probenspezifischen Interferenzstrahlung, einer Messeinrichtung, mit der Leistungsänderungen und Polarisationsänderungen der Interferenzstrahlung messbar sind, und einer Auswerteeinrichtung, mit der die chromatische Dispersion der Probe anhand der Leistungsänderungen und/oder Polaristionsänderung ermittelbar sind. Darüber hinaus betrifft die vorliegende Erfindung ein entsprechendes Verfahren zur Bestimmung der chromatischen Dispersion einer Probe.

Bei Test- und Messgeräten für die Charakterisierung optischer Komponenten sind in der Messtechnikentwicklung zwei Trends zur Reduzierung der Messzeit zu beobachten:
1. Trend zu Swept-Wavetength-Systemen
   Bei diesen Systemen werden die Messparameter nicht punktweise bei schrittweise veränderter Wellenlänge gemessen, sondern ein abstimmbarer Laser wird kontinuierlich über den zu analysierenden Wellenlängenbereich abgestimmt, während die Messdaten aufgenommen werden.
2. Trend zu All-Parameter-Analysatoren
   Ein derartiges Messsystem ist in der Lage, möglichst alle relevanten Parameter in kurzer Zeit und gegebenenfalls gleichzeitig mit nur einem Laser-Scan über den gesamten spektralen Messbereich zu erfassen. Bei optischen Komponenten zählen u.a. zu den relevanten Messparametern:
   - IL Einfügungsverlust (Insertion loss),
   - RL Reflexionsverlust (Retum loss)
   - PDL polarisationsabhängige Dämpfung (Polarization dependent loss)
   - PMD Polarisations-Moden-Dispersion bestehend aus der Grüppenlaufzeit DGD (Differential group delay) und den Hauptzuständen PSP (Principal states of polarization) der Polarisation, und
   - CD die chromatische Dispersion beziehungsweise Gruppenlaufzeit GD.

Die im folgenden beschriebenen Messverfahren, beziehungsweise Messvorrichtungen, spiegeln diese Trends wider.

Hinsichtlich der CD-Messung (chromatische Dispersion) sind prinzipiell zwei unterschiedliche Messverfahren bekannt. Die eine basiert auf der elektrischen Messung und die andere auf der optischen Messung der Phasenlaufzeit.

Eine Vorrichtung zur elektrischen Bestimmung der Phasenlaufzeit ist in Figur 1 wiedergegeben. Die Strahlung eines abstimmbaren Lasers 1 wird in einem Modulator, beispielsweise in einem Frequenzbereich von 0.1 bis 5 GHz, sinusförmig moduliert. Hierzu wird der Modulator 2 durch einen Hochfrequenzgenerator 3 angesteuert. Das modulierte Licht wird durch eine Probe 4 (DUT, device under test) gesandt. Ein optischer Detektor 5 detektiert das durch die Probe 4 beeinflusste modulierte Licht und gibt ein entsprechendes elektrisches Signal an einen Vergleicher 6 weiter. Dieser vergleicht die Phase des elektrischen Signals des optischen Detektors 5 mit dem vom Hochfrequenzgenerator 3 erhaltenen Phasensignal. Aus diesem elektrischen Phasenvergleich und der Wellenlängeninformation des abstimmbaren Lasers 1 ermittelt eine Auswerteeinheit 7 die chromatische Dispersion.

Das Licht erfährt auf dem Weg durch die Probe, beziehungsweise durch das Messobjekt DUT 4, eine Verzögerung, die sich in einer Gruppenlaufzeit äußert. Diese Gruppenlaufzeit berechnet sich aus der Ableitung der Phasengeschwindigkeit und ist wellenlängenabhängig. Die Ableitung der wellenlängenabhängigen Gruppenlaufzeit ergibt die wellenlängenabhängige chromatische Dispersion des Messobjekts 4 mit der Dimension ps/nm.

Eine Vorrichtung zur optischen Bestimmung der Phasenlaufzeit ist in Figur 2 ebenfalls in einem Blockdiagramm wiedergegeben. Das Messobjekt 4 wird hier in einem Interferometer 10 analysiert. Dort wird das von dem abstimmbaren Laser 1 stammende Licht in einem ersten Koppler 11 aufgespaltet. Hierdurch entstehen zwei optische Pfade, der Referenzarm 12 und der Messarm 13, in dem das Messobjekt 4 liegt. Ein zweiter Koppler 14 bringt die beiden Strahlen aus dem Referenzarm 12 und dem Messarm 13 zur Interferenz. Durch diese Zusammenführung werden die beiden Signalfeldstärken addiert. In dem anschließenden optischen Detektor 5 erfolgt die Umwandlung in ein elektrisches Überlagerungssignal, das von der Phasenlage, der Dämpfung und der Polarisationstransformation in beiden Interferometerarmen sowie von der Wellenlänge abhängt. Das Überlagerungssignal wird wiederum zusammen mit der Wellenlängeninformation von dem abstimmbaren Laser 1 der Auswerteeinheit 7 zur Ermittlung der chromatischen Dispersion zugeleitet. Wird die Wellenlänge durchgestimmt, so ergibt sich ein periodisches Detektorsignal, dessen Periode mit dem Gruppenlaufzeitunterschied in beiden Interferometerarmen zusammenhängt.

Nachteilig an diesem Verfahren ist, dass in dem optischen Detektor 5 nur eine Summenleistung aus beiden Interferometerarmen gemessen wird. Dabei spielt jedoch die relative Lage der Polarisationen in beiden Armen eine entscheidende Rolle. Bei gleicher Polarisation treten die größten Leistungsschwankungen bei veränderlicher Wellenlänge auf. Die Phasenbestimmung ist dann leicht möglich. Im Gegensatz dazu treten bei orthogonaler Polarisation keinerlei Leistungsschwankungen bei veränderlicher Wellenlänge auf, sondern lediglich Polarisationsschwankungen. In diesem Fall ist eine Phasenbestimmung nicht möglich.

Eine verbesserte Version dieser Messvorrichtung zur Bestimmung der Phasenlaufzeitdifferenz, beziehungsweise chromatischen. Dispersion, sieht daher vor, dass der optische Detektor 5 polarisationsabhängig ausgeführt wird. Eine Möglichkeit hierzu besteht in der Verwendung eines Polarisationsstrahlteilers (PBS) 20 einschließlich zweier optischer Detektoren 21 und 22, wie dies in Figur 3 dargestellt ist. Durch den Polarisationsstrahlteiler 20 wird der überlagerte Lichtstrahl in zwei orthogonal polarisierte Strahlteile zerlegt. Die mit den optischen Detektoren 21 und 22 detektierten Leistungen dieser beiden Teilstrahlen werden jeweils an die Auswerteeinheit 7 weitergeleitet.

Mit diesem Messaufbau kann eine sich verändernde Polarisation erkannt werden. Voraussetzung ist jedoch, dass sich die beiden Polarisationen in den Interferometerarmen 12, 13 nicht zufällig auf die Eigenpolarisation des PBS 20 abbilden. In diesem Fall würde nämlich jeder Detektor 21, 22 die Leistung in beiden Interferometerarmen 12, 13 messen und eine Überlagerung beider Leistungen mit periodischem Überlagerungsergebnis würde nicht entstehen. Aus diesem Grund muss konventionell in dieser Messanordnung eine Polarisationsanpassung beispielsweise durch einen Polarisationssteller 30 vorgesehen sein, die gewährleistet, dass die Leistung aus dem Referenzarm 12 sich ungefähr gleichmäßig auf die beiden Detektoren 21, 22 aufteilt. Nur dann ist bei jeder beliebigen Polarisation im Messzweig 13 ein Phasenvergleich zwischen beiden Zweigen möglich. Ein derartiges Gerät zur Messung optischer Eigenschaften eines Messobjekts ist aus dem Dokument EP1207 377A2 bekannt.

Das Einstellen der Polarisationen in den beiden Interferometerzweigen ist jedoch verhältnismäßig aufwendig. Es kann nicht davon ausgegangen werden, dass eine bei einer Start-Wellenlänge optimal eingestellte Polarisation am Ende des Referenzarmes 12 bei anderen Wellenlängen innerhalb des zu untersuchenden Wellenlängenbereiches erhalten bleibt. Im allgemeinen wird sich die Polarisation durch geringfügig vorhandene PMD im Referenzarm 12 von ihrem idealen Zustand weg bewegen.

Aus der Druckschrift EP 1 369 662 A2, veröffentlicht am 10. Dezember 2003, ist die Bestimmung der chromatischen Dispersion eines Messobjekts bekannt, wobei interferometrische und polarimetrische Messungen kombiniert werden. Dabei werden mit einem Polarimeter Leistungsänderungen und Polarisationsänderungen der Interferenzstrahlung gemessen.

Die Aufgabe der vorliegenden Erfindung besteht darin, ein Verfahren und eine Vorrichtung vorzuschlagen, um die chromatische Dispersion einfacher bestimmen zu können und Nachteile durch die Wellenlängenabhängigkeit der Polarisationseinstellung zu vermeiden. Des weiteren gilt es, Nachteile zu eliminieren, die aufgrund der begrenzten optische Güte (Extinction Ratio ER) des Polarisationsstrahlteilers 20 entstehen können.

Erfindungsgemäß wird diese Aufgabe gelöst durch eine Vorrichtung zur Bestimmung der chromatischen Dispersion einer Probe mit einer Strahlungsquelle zum Abstrahlen einer Strahlung mit unterschiedlichen Wellenlängen, einer Interferometereinrichtung, die einen Referenzarm und Messarm umfasst und die von der Strahlungsquelle bestrahlt wird, um eine probenspezifische Interferenzstrahlung zu erzeugen, einer Messeinrichtung, mit der Leistungsänderungen und Polarisationsänderungen der Interferenzstrahlung messbar sind, und einer Auswerteeinrichtung, mit der die chromatische Dispersion der Probe anhand der Leistungsänderungen und Polarisationsänderungen ermittelbar sind, wobei die Messeinrichtung ein Polarimeter umfasst, und wobei mit dem Polarimeter zwei orthogonale Polarisationen so auswertbar sind, dass die Leistung aus dem Referenzarm der Interferometereinrichtung in zwei virtuelle Teilleistungen zerlegt wird, die jeweils gleich groß sind.

Darüber hinaus ist erfindungsgemäß ein Verfahren zur Bestimmung der chromatischen Dispersion einer Probe vorgesehen, durch Erzeugen eines elektromagnetischen Strahls einer Strahlung mit unterschiedlichen Wellenlängen, Aufteilen des Strahls in einen Referenzstrahl und einen Messstrahl, mit dem die Probe durchstrahlt wird, Überlagern des Referenzstahls und des Messstrahls unter Erhalt eines Interferenzstrahls, Messen von Leistungsänderungen und Polarisationsänderungen des Interferenzstrahls in Abhängigkeit von der Wellenlänge der Strahlung, und Ermitteln der chromatische Dispersion der Probe anhand der Leistungsänderungen und/oder Polarisationsändenrngen, wobei das Messen mit einem Polarimeter erfolgt, und wobei mit dem Polarimeter zwei orthogonale Polarisationszustände zur Bestimmung der Leistungsänderungen so gewählt werden, dass die Leistung aus dem Referenzarm der Interferometereinrichtung in gleich große virtuelle Teilleistungen zerlegt wird.

Das Polarimeter gewährleistet, dass die durch die Interferenz im Interferometer hervorgerufenen wellenlängenabhängigen Schwankungen unabhängig von der Polarisation in den beiden Interferometerzweigen bestimmt werden können. Die Schwankungen umfassen Leistungs- und/oder Polarisationsschwankungen, abhängig von der relativen Lage der beiden Polarisationen aus den Interferometerarmen. Bei identischen Polarisationen treten nur Leistungsschwankungen auf, bei orthogonalen Polarisationen sind nur Polarisationsschwankungen messbar. Im allgemeinen Fall zufälliger Polarisationszustände werden sowohl Leistungs- als auch Polarisationsschwankungen gleichzeitig auftreten, die beide exakt vom Polarimeter erfasst werden. Es muss kein Polarisationssteller vor dem Interferometer vorgesehen werden, der eine bestimmte Polarisation in der Detektoreinheit sicherstellt.

Vorzugsweise kann es sich bei dem Polarimeter um ein vollständiges Polarimeter, das Messwerte zu allen vier Stokes-Parametern liefert, handeln. Mit diesen vier Stokes-Parametern sind zahlreiche optische Eigenschaften des Messobjekts berechenbar.

Die durch das Polarimeter gewonnenen Messdaten lassen sich auf einfache Weise in die Meßdaten umrechnen, die ein virtueller Polarisationstrahlteiler mit idealer Leistungsaufteilung liefern würde. Die beiden orthogonalen Polarisationen des virtuellen Polarisationsstrahlteilers lassen sich für jede Wellenlänge so definieren, dass sie die Leistung aus dem Referenzarm in zwei gleich große Teilleistungen zerlegen und damit maximale (virtuelle) Leistungsschwankungen detektierbar sind. Dadurch kann der Einfluss der Polarisationsmodendispersion im Referenzarm reduziert werden. Vorzugsweise besteht die Lichtquelle aus einem abstimmbaren Laser. Dieser hat den Vorteil, dass er definiert polarisiertes Licht abstrahlt.

Die Auswertung der Messergebnisse basiert auf den vom Polarimeter gewonnenen wellenlängenabhängigen Stokes-Parametern (S₀, S₁, S₂, S₃)(λ), die jeweils beim Referenz-Scan und beim eigentlichen Mess-Scan ermittelt wurden. Diese Messdaten können beispielsweise auf die Daten zurückgeführt werden, die ein idealisierter Polarisationsstrahlteiler ermitteln würde, so dass auch die gleichen mathematischen Berechnungsmethoden gemäß dem Stand der Technik angewendet werden könnten. Die vorliegende Erfindung wird anhand der beigefügten Zeichnungen näher erläutert, die zeigen:
- Figur 1: ein Blockschaltbild eines Messaufbaus zur elektrischen Bestimmung der Gruppenlaufzeit gemäß dem Stand der Technik;
- Figur 2: ein Blockschaltbild eines Messaufbaus zur optischen Bestimmung der Gruppenlaufzeit gemäß dem Stand der Technik;
- Figur 3: ein Blockschaltbild eines alternativen Messaufbaus zur optischen Bestimmung der Gruppenlaufzeit gemäß dem Stand der Technik; und
- Figur 4: ein Blockschaltbild eines Messaufbaus zur optischen Bestimmung der Gruppenlaufzeit gemäß der vorliegenden Erfindung.

Die nachfolgend aufgeführten Ausführungsbeispiele sind bevorzugte Ausführungsformen der vorliegenden Erfindung.

Die Struktur des in Figur 4 dargestellten Messaufbaus entspricht im wesentlichen der von Figur 2. Die Elemente mit den gleichen-Bezugszeichen haben die jeweils gleiche Funktion. Hinsichtlich dieser Komponenten wird daher auf die Beschreibung von Figur 2 verwiesen. Der optische Detektor aus Figur 2 ist jedoch erfindungsgemäß durch ein Polarimeter 50 ersetzt. Bezogen auf die Ausführungsform von Figur 3 ersetzt das Polarimeter 50 den Polarisationsstrahlteiler 20 einschließlich der beiden Detektoren 21 und 22. Das Polarimeter kann vollständig die Funktionalität des Polarisationsstrahlteilers ersetzen, weil die gemessenen Parameter (vier Stokes-Parameter S₀, S₁, S₂ und S₃) Informationen über Leistung und Polarisation liefern, die leicht in zwei Leistungen bei orthogonalen Polarisationen zerlegt werden können. Das Polarimeter hat damit die gleichen Eingangs- aber mehr Ausgangsgrößen wie der Polarisationsstrahlteiler 20 mit den beiden Detektoren 21 und 22. Das Polarimeter 50 kann einen virtuellen Polarisationsstrahlteiler PBS darstellen, der folgende Vorteile besitzt:
- Die zwei orthogonalen Polarisationsrichtungen, in die das detektierte Licht mathematisch zerlegt werden kann, können frei gewählt werden. Beispielsweise können die Richtungen H/V (horizontal/vertikal), + 45°/ -45° oder R/L (rechts/links) oder beliebige andere Richtungspaare gewählt werden. Die Aufteilung des Lichts in den beiden Polarisationsrichtungen kann damit so gewählt werden, dass die Leistung aus dem Referenzarm 12 immer ideal mit 50:50 in beiden virtuellen Teilleistungen zerlegt werden kann. Hierdurch können unter Beibehaltung der Aufteilung von 50:50 die beiden Polarisationsrichtungen flexibel gestaltet werden, selbst wenn sich die Polarisation im Referenz-Arm des interferometers während des Wellenlängenscans ändert. Derartige wellenlängenabhängige Änderungen lassen sich üblicherweise nicht vermeiden und resultieren aus einem geringfügigen Einfluss der PMD im Referenzarm 12. Die störende Wirkung der PMD im Referenzarm kann aber mit Hilfe des Polarimeters eliminiert werden.
   Das Polarimeter hat weiterhin den Vorteil, dass weder die Polarisation im Referenzarm noch die Eingangspolarisation des Interferometers so eingestellt werden muss, dass die Leistungsaufteilung am Polarisationsstrahlteiler für beide Arme brauchbar wird. Der Polarisationssteller und der Vorgang des Optimierens der Polarisation kann also mit dem erfindungsgemäßen Einsatz des Polarimeters entfallen. Ein Polarimeter nach dem DUT kann beispielsweise bei einem All-Parameter-Analysator bereits vorhanden sein, so dass die CD-Messung kostengünstig realisiert werden kann.,
   Ein weiterer Vorteil der Verwendung eines Polarimeters besteht darin, dass die CD-Messung genauer durchgeführt werden kann. Dies ist erreichbar, wenn das Polarimeter sehr genau kalibriert wird (vergleiche parallele Patentanmeldung der Anmelderin mit dem Titel "Verfahren zur hochgenauen Kalibrierung von Polarimetern"), so dass man nicht durch die verhältnismäßig niedrigen EXtinktionswerte von 20 bis 30 dB eines Polarisationsstrahlteilers begrenzt wird.
   Der Messverlauf gestaltet sich dann so, dass zunächst in einem Referenz-Scan die Wellenlänge des abstimmbaren Lasers über den zu analysierenden .. Bereich gefahren wird, wobei der Messpfad unterbrochen ist. Das Polarimeter misst dabei sowohl die wellenlängenabhängige Leistung als auch die wellenlängenabhängigen Polarisationszustände. Diese Informationen sind in den wellenlängenabhängigen Stokes-Parametern (S₀, S₁, S₂, S₃ )(λ) enthalten. Anschließend wird der Messarm aktiviert und ein entsprechendes Überlagerungsergebnis ebenfalls in Form der wellenlängenabhängigen Stokes-Parametern (S₀, S₁, S₂, S₃ )(λ) ermittelt. Diese Daten ermöglichen eine mathematische Berechnung der wellenlängenabhängigen Gruppengeschwindigkeit, deren Ableitung unmittelbar die chromatische Dispersion ergibt.
   Es ist zu beachten, dass zu dem Messergebnis nicht nur die CD sondern auch die im Messobjekt enthaltene PMD beiträgt Da die PMD in Form der wellenlängenabhängigen DGD (Differential Group Delay) und PSP (Principal States of Polarization) durch bereits durchgeführte Standard-Messverfahren detailliert bekannt ist, kann der Anteil der PMD aus den Messergebnissen eliminiert.

## Patentansprüche (Patentansprüche für folgende(n) Vertragsstaat(en): AT, BE, BG, CH, CY, CZ, DK, EE, ES, FI, FR, GR, HU, IE, IT, LI, LU, MC, NL, PT, SE, SI, SK, TR)

1. Vorrichtung zur Bestimmung der chromatischen Dispersion einer Probe (4) mit
einer Strahlungsquelle (1) zum Abstahlen einer Strahlung mit unterschiedlichen Wellenlängen,
einer Interferometereinrichtung (10), die einen Referenzarm (12) und Messarm (13) umfasst und die von der Strahlungsquelle (1) bestrahlbar ist, zum Erzeugen einer probenspezifischen Interferenzstrahlung,
einer Messeinrichtung, mit der Leistungsänderungen und Polarisationsänderungen der Interferenzstrahlung messbar sind, und
einer Auswerteeinrichtung (7), mit der die chromatische Dispersion der Probe (4) anhand der Leistungsänderungen und der Polarisationsänderungen ermittelbar sind,
**dadurch gekennzeichnet, dass**
die Messeinrichtung ein Polarimeter (50) umfasst.

2. Vorrichtung nach Anspruch 1, wobei mit dem Polarimeter (50) zwei orthogonale Polarisationen so auswertbar sind, dass die Leistung aus dem Referenzarm (12) der Interferometereinrichtung (10) in zwei virtuelle Teilleistungen zerlegt wird, die jeweils gleich groß sind.

3. Vorrichtung nach einem der Ansprüche 1 und 2, wobei die Strahlungsquelle (1) einen abstimmbaren Laser umfasst.

4. Vorrichtung nach einem der Ansprüche 1 bis 3, wobei in der Auswerteeinrichtung (7) die chromatische Dispersion mittels Auswertung wellenlängenabhängiger Stokes-Parametern ermittelbar ist.

5. Verfahren zur Bestimmung der chromatischen Dispersion einer Probe (4) mit den Schritten:
- Erzeugen eines elektromagnetischen Strahls einer Strahlung mit unterschiedlichen Wellenlängen,
- Aufteilen des Strahls in einen Referenzstrahl (12) und einen Messstrahl (13), mit dem die Probe (4) durchstrahlt wird,
- Überlagern des Referenzstrahls und des Messstrahls unter Erhalt eines Interferenzstrahls,
- Messen von Leistungsänderungen und Polarisationsänderungen des Interferenzstrahls in Abhängigkeit von der Wellenlänge der Strahlung, und
- Ermitteln der chromatische Dispersion der Probe (4) anhand der wellenlängenabhängigen Leistungsänderungen und Polarisationsänderungen,
**dadurch gekennzeichnet, dass**
das Messen mit einem Polarimeter (50) erfolgt.

6. Verfahren nach Anspruch 5, wobei mit dem Polarimeter (50) zwei orthogonale Polaristionszustände zur Bestimmung der Leistungsänderungen so gewählt werden, dass die Leistung aus dem Referenzarm (12) der Interferometereinrichtung (10) in gleich große virtuelle Teilleistungen zerlegt wird.

7. Verfahren nach einem der Ansprüche 5 und 6, wobei die elektromagnetische Strahlung mittels eines abstimmbaren Lasers (1) erzeugt wird.

8. Verfahren nach einem der Ansprüche 5 bis 7, wobei das Ermitteln der chromatischen Dispersion aus den wellenlängenabhängigen Stokes-Parametern aus Referenz-Scan und Mess-Scan erfolgt.

## Patentansprüche (Patentansprüche für folgende(n) Vertragsstaat(en): DE, GB)

1. Vorrichtung zur Bestimmung der chromatischen Dispersion einer Probe (4) mit
einer Strahlungsquelle (1) zum Abstahlen einer Strahlung mit unterschiedlichen Wellenlängen,
einer Interferometereinrichtung (10), die einen Referenzarm (12) und Messarm (13) umfasst und die von der Strahlungsquelle (1) bestrahlbar ist, zum Erzeugen einer probenspezifischen Interferenzstrahlung,
einer Messeinrichtung, mit der Leistungsänderungen und Polarisationsänderungen der Interferenzstrahlung messbar sind, und die ein Polarimeter (50) umfasst, und
einer Auswerteeinrichtung (7), mit der die chromatische Dispersion der Probe (4) anhand der Leistungsänderungen und der Polarisationsänderungen ermittelbar sind,
**dadurch gekennzeichnet, dass**
mit dem Polarimeter (50) zwei orthogonale Polarisationen so auswertbar sind, dass die Leistung aus dem Referenzarm (12) der Interferometereinrichtung (10) in zwei virtuelle Teilleistungen zerlegt wird, die jeweils gleich groß sind.

2. Vorrichtung nach Anspruch 1, wobei die Strahlungsquelle (1) einen abstimmbaren Laser umfasst.

3. Vorrichtung nach einem der Ansprüche 1 und 2, wobei in der Auswerteeinrichtung (7) die chromatische Dispersion mittels Auswertung wellenlängenabhängiger Stokes-Parametern ermittelbar ist.

4. Verfahren zur Bestimmung der chromatischen Dispersion einer Probe (4) mit den Schritten:
- Erzeugen eines elektromagnetischen Strahls einer Strahlung mit unterschiedlichen Wellenlängen,
- Aufteilen des Strahls in einen Referenzstrahl (12) und einen Messstrahl (13), mit dem die Probe (4) durchstrahlt wird,
- Überlagern des Referenzstrahls und des Messstrahls unter Erhalt eines Interferenzstrahls,
- Messen von Leistungsänderungen und Polarisationsänderungen des Interferenzstrahls in Abhängigkeit von der Wellenlänge der Strahlung mit einem Polarimeter, und
- Ermitteln der chromatische Dispersion der Probe (4) anhand der wellenlängenabhängigen Leistungsänderungen und Polarisationsänderungen,
**dadurch gekennzeichnet, dass**
mit dem Polarimeter (50) zwei orthogonale Polaristionszustände zur Bestimmung der Leistungsänderungen so gewählt werden, dass die Leistung aus dem Referenzarm (12) der Interferometereinrichtung (10) in gleich große virtuelle Teilleistungen zerlegt wird.

5. Verfahren nach Anspruch 4, wobei die elektromagnetische Strahlung mittels eines abstimmbaren Lasers (1) erzeugt wird.

6. Verfahren nach einem der Ansprüche 4 und 5, wobei das Ermitteln der chromatischen Dispersion aus den wellenlängenabhängigen Stokes-Parametern aus Referenz-Scan und Mess-Scan erfolgt.

## Claims (Claims for the following Contracting State(s): AT, BE, BG, CH, CY, CZ, DK, EE, ES, FI, FR, GR, HU, IE, IT, LI, LU, MC, NL, PT, SE, SI, SK, TR)

1. Device for determining the chromatic dispersion of a sample (4) with
a radiation source (1) for emitting a radiation with different wavelengths,
an interferometer apparatus (10) which comprises a reference arm (12) and a measurement arm (13) and which is irradiatable by the radiation source (1), for generating a sample-specific interference radiation,
a measurement apparatus, with which power changes and polarisation changes of the interference radiation are measurable, and
an evaluation apparatus (7), with which the chromatic dispersion of the sample (4) is determinable on the basis of the power changes and the polarisation changes,
**characterised in that**
the measurement apparatus comprises a polarimeter (50).

2. Device according to claim 1, with two orthogonal polarisations being evaluatable with the polarimeter (50) in such a way that the power from the reference arm (12) of the interferometer apparatus (10) is split into two partial powers which are of the same magnitude.

3. Device according to one of claims 1 and 2, with the radiation source (1) comprising a tuneable laser.

4. Device according to one of claims 1 to 3, with the chromatic dispersion being determinable in the evaluation apparatus (7) by means of the evaluation of the wavelength-dependent Stokes parameters.

5. Method for determining the chromatic dispersion of a sample (4) with the steps:
- generating an electromagnetic beam of a radiation with different wavelengths,
- splitting the beam into a reference beam (12) and a measurement beam (13) with which the sample (4) is radiograped,
- superimposing the reference beam and the measurement beam whilst retaining an interference beam,
- measuring power changes and polarisation changes of the interference beam as a function of the wavelength of the radiation, and
- determining the chromatic dispersion of the sample (4) on the basis of the wavelength-dependent power changes and polarisation changes,
**characterised in that**
the measuring takes place with a polarimeter (50).

6. Method according to claim 5, with two orthogonal states of polarisation for determining the power changes being selected with the polarimeter (50) such that the power from reference arm (12) of the interferometer apparatus (10) is broken down into virtual partial powers of the same magnitude.

7. Method according to one of claims 5 and 6, with the electromagnetic radiation being generated by means of a tuneable laser (1).

8. Method according to one of claims 5 to 7, with the determining of the chromatic dispersion from the wavelength-dependent Stokes parameter occurring from the reference scan and the measurement scan.

## Claims (Claims for the following Contracting State(s): DE, GB)

1. Device for determining the chromatic dispersion of a sample (4) with
a radiation source (1) for emitting a radiation with different wavelengths,
an interferometer apparatus (10) which comprises a reference arm (12) and a measurement arm (13) and which is irradiatable by the radiation source (1), for generating a sample-specific interference radiation,
a measurement apparatus, with which power changes and polarisation changes of the interference radiation are measurable and which comprises a polarimeter (50), and
an evaluation apparatus (7), with which the chromatic dispersion of the sample (4) is determinable on the basis of the power changes and the polarisation changes,
**characterised in that**
two orthogonal polarisations are evaluatable with the polarimeter (50) in such a way that the power from the reference arm (12) of the interferometer apparatus (10) is split into two partial virtual powers which are of the same magnitude.

2. Device according to claim 1, with the radiation source (1) comprising a tuneable laser.

3. Device according to one of claims 1 and 2, with the chromatic dispersion being determinable in the evaluation apparatus (7) by means of the evaluation of the wavelength-dependent Stokes parameters.

4. Method for determining the chromatic dispersion of a sample (4) with the steps:
- generating an electromagnetic beam of a radiation with different wavelengths,
- splitting the beam into a reference beam (12) and a measurement beam (13) with which the sample (4) is radiographed,
- superimposing the reference beam and the measurement beam whilst retaining an interference beam,
- measuring power changes and polarisation changes of the interference beam as a function of the wavelength of the radiation with a polarimeter, and
- determining the chromatic dispersion of the sample (4) on the basis of the wavelength-dependent power changes and polarisation changes,
**characterised in that**
two orthogonal states of polarisation for determining the power changes are selected with the polarimeter (50) such that the power from reference arm (12) of the interferometer apparatus (10) is broken down into virtual partial powers of the same magnitude.

5. Method according to claim 4, with the electromagnetic radiation being generated by means of a tuneable laser (1).

6. Method according to one of claims 4 and 5, with the determining of the chromatic dispersion from the wavelength-dependent Stokes parameters occurring from the reference scan and the measurement scan.

## Revendications (Revendications pour l'(les) Etat(s) contractant(s) suivant(s): BE, BG, CH, CY, CZ, DK, EE, ES, Fl, FR, GR, HU, IE, IT, LI, LU, MC, NL, PT, SE, SI, SK, TR)

1. Dispositif de détermination de la dispersion chromatique d'un échantillon (4), comprenant:
une source de rayonnement (1) pour émettre un rayonnement à longueurs d'ondes différentes,
un interféromètre (10) comportant un bras de référence (12) ainsi qu'un bras de mesure (13) et pouvant être exposé à un rayonnement (1) provenant de la source de rayonnement, pour générer un rayonnement d'interférence spécifique pour l'échantillon,
un dispositif de mesure permettant la mesure de variations de puissance et de polarisation du rayonnement d'interférence, et
un dispositif de dépouillement (7) permettant la détermination de la dispersion chromatique de l'échantillon (4) sur la base des variations de puissance et de polarisation,
**caractérisé en ce que** le dispositif de mesure comprend un polarimètre (50).

2. Dispositif selon la revendication 1, dans lequel le polarimètre (50) permet d'évaluer deux polarisations orthogonales de manière que la puissance du bras de référence (12) de l'interféromètre (10) est décomposée en deux puissances partielles virtuelles à valeur identique.

3. Dispositif selon l'une des revendications 1 et 2, dans lequel la source de rayonnement (1) comporte un laser ajustable.

4. Dispositif selon l'une des revendications 1 à 3, dans lequel le dispositif de dépouillement (7) permet la détermination de la dispersion chromatique grâce au dépouillement de paramètres Stokes fonction des longueurs d'ondes.

5. Procédé de détermination de la dispersion chromatique d'un échantillon (4), comprenant les étapes suivantes:
- génération d'un faisceau électromagnétique d'un rayonnement à longueurs d'ondes différentes,
- décomposition du faisceau en un faisceau de référence (12) et un faisceau de mesure (13) dont le rayonnement traverse l'échantillon (4),
- superposition du faisceau de référence et du faisceau de mesure en obtenant un faisceau d'interférence,
- mesure de variations de puissance et de polarisation du faisceau d'interférence en fonction de la longueur d'ondes du rayonnement, et
- détermination de la dispersion chromatique (4) sur la base des variations de puissance et de polarisation fonction des longueurs d'ondes,
**caractérisé en ce que** la mesure se fait à l'aide d'un polarimètre (50).

6. Procédé selon la revendication 5, dans lequel le polarimètre (50), pour la détermination de variations de puissance, permet de choisir deux états de polarisation orthogonaux de sorte que la puissance du bras de référence (12) de l'interféromètre (10) est décomposée en deux puissances partielles virtuelles à valeur identique.

7. Procédé selon l'une des revendications 5 et 6, dans lequel le rayonnement électromagnétique est générée à l'aide d'un laser (1) ajustable.

8. Procédé selon l'une des revendications 5 à 7, dans lequel la détermination de la dispersion chromatique à partir des paramètres Stokes fonction des longueurs d'ondes se fait sur la base du scanning de référence et du scanning de mesure.

## Revendications (Revendications pour l'(les) Etat(s) contractant(s) suivant(s): DE, GB)

1. Dispositif de détermination de la dispersion chromatique d'un échantillon (4), comprenant:
une source de rayonnement (1) pour émettre un rayonnement à longueurs d'ondes différentes,
un interféromètre (10) comportant un bras de référence (12) ainsi qu'un bras de mesure (13) et pouvant être exposé à un rayonnement (1) provenant de la source de rayonnement, pour générer un rayonnement d'interférence spécifique pour l'échantillon,
un dispositif de mesure permettant la mesure de variations de puissance et de polarisation du rayonnement d'interférence, et qui comprend un polarimètre (50), et
un dispositif de dépouillement (7) permettant la détermination de la dispersion chromatique de l'échantillon (4) sur la base des variations de puissance et de polarisation,
**caractérisé en ce que** le polarimètre (50) permet d'évaluer deux polarisations orthogonales de manière que la puissance du bras de référence (12) de l'interféromètre (10) est décomposée en deux puissances partielles virtuelles à valeur identique.

2. Dispositif selon la revendication 1, dans lequel la source de rayonnement (1) comporte un laser ajustable.

3. Dispositif selon l'une des revendications 1 et 2, dans lequel le dispositif de dépouillement (7) permet la détermination de la dispersion chromatique grâce au dépouillement de paramètres Stokes fonction des longueurs d'ondes.

4. Procédé de détermination de la dispersion chromatique d'un échantillon (4), comprenant les étapes suivantes:
- génération d'un faisceau électromagnétique d'un rayonnement à longueurs d'ondes différentes,
- décomposition du faisceau en un faisceau de référence (12) et un faisceau de mesure (13) dont le rayonnement traverse l'échantillon (4),
- superposition du faisceau de référence et du faisceau de mesure en obtenant un faisceau d'interférence,
- mesure de variations de puissance et de polarisation du faisceau d'interférence en fonction de la longueur d'ondes du rayonnement, et
- détermination de la dispersion chromatique (4) sur la base des variations de puissance et de polarisation fonction des longueurs d'ondes,
**caractérisé en ce que** le polarimètre (50), pour la détermination de variations de puissance, permet de choisir deux états de polarisation orthogonaux de sorte que la puissance du bras de référence (12) de l'interféromètre (10) est décomposée en deux puissances partielles virtuelles à valeur identique.

5. Procédé selon la revendication 4, dans lequel le rayonnement électromagnétique est générée à l'aide d'un laser (1) ajustable.

6. Procédé selon l'une des revendications 4 et 5, dans lequel la détermination de la dispersion chromatique à partir des paramètres Stokes fonction des longueurs d'ondes se fait sur la base du scanning de référence et du scanning de mesure.
